# EUROPÄISCHE PATENTSCHRIFT

(11) **EP 2 971 917 B1**
(45) Veröffentlichungstag und Bekanntmachung des Hinweises auf die Patenterteilung: **25.10.2017**
(21) Anmeldenummer: 14707810.9
(22) Anmeldetag: 05.03.2014
(51) Int. Cl.: F16L 33/025, F16L 33/207

(54) **SCHLAUCHLEITUNGSVERBINDER SOWIE LEITUNGSSATZ**
HOSE-LINE CONNECTOR AND LINE SET
CONNECTEUR DE CÂBLE SOUPLE ET FAISCEAU DE CÂBLES

(30) Priorität: 11.03.2013 DE 102013102413
(43) Veröffentlichungstag der Anmeldung: 20.01.2016
(73) Patentinhaber: Voss Automotive GmbH, 51688 Wipperfürth (DE)
(72) Erfinder: BIRKHOLZ, Thomas, 51645 Gummersbach (DE); PLIETSCH, Reinhard, 42929 Wermelskirchen (DE)
(74) Vertreter: Patent- und Rechtsanwälte Dr. Solf & Zapf
(86) Internationale Anmeldenummer: PCT/EP2014/054214
(87) Internationale Veröffentlichungsnummer: WO 2014/139841

(56) Entgegenhaltungen:
- WO-A1-2009/074479
- DE-A1-102011 016 496
- FR-A- 1 199 001
- US-A- 2 139 745
- US-A- 4 330 142
- US-A1- 2010 109 319

## Beschreibung

Die vorliegende Erfindung betrifft gemäß dem Oberbegriff der unabhängigen Ansprüche 1, 2 und 3 einen Schlauchleitungsverbinder.

Weiterhin betrifft die Erfindung auch einen Leitungssatz mit einer Schlauchleitung und mindestens einem Schlauchleitungsverbinder gemäß der Erfindung.

Es sei zunächst erläuternd bemerkt, dass eine Schlauchleitung im Sinne der Erfindung eine flexible Medienleitung für Flüssigkeiten oder Gase ist, die eine flexible und bevorzugt in einem bestimmten Maße elastisch dehnbare Schlauchwandung aufweist. Die Schlauchwandung kann ein- oder mehrschichtig ausgebildet sein, beispielsweise aus einer Innenschicht, mindestens einer Druckträgerschicht sowie mindestens einer weiteren Schicht, insbesondere einer Außenschicht. Die Druckträgerschicht bildet eine Armierung zur Aufnahme von inneren Mediendrücken.

Ein bekannter Schlauchleitungsverbinder sowie auch ein Leitungssatz sind in dem Dokument WO 2009/074479 A1 beschrieben. Bei dem Schlauchstutzen dieses bekannten Verbinders ist der Halteabschnitt mit einer zylindrischen Umfangsfläche im Anschluss an eine radiale Haltestufe am Übergang zu dem Dichtabschnitt ausgebildet. Um eine gute Halterung der aufgesteckten Schlauchleitung mit guter innerer Abdichtung zwischen dem Dichtabschnitt und der Innenfläche der Schlauchleitung zu gewährleisten, wird die Schlauchleitung auf dem bekannten Stutzen zweifach, in zwei axial hintereinander liegenden Klemmbereichen radial geklemmt, und zwar einerseits im Bereich des Halteabschnittes, andererseits aber auch im Bereich des Dichtabschnittes. Wegen der zweifachen radialen Klemmung ist die Schlauchmontage etwas umständlich.

Aus der US 2,139,745 ist ein Schlauchleitungsverbinder bekannt, der einen Halteabschnitt mit Umfangsrippen, welche aneinanderliegen, aufweist, wobei sich quer zu den Umfangsrippen mehrere, über den Umfang verteilte Längsrippen über den gesamten Halteabschnitt, von dem Dichtabschnitt bis zu einem Anschlag erstrecken. Bei diesem bekannten Schlauchleitungsverbinder liegen die Umfangsrippen unmittelbar aneinander, und die Längsrippen überdecken die Umfangsrippen. Bei diesem bekannten Leitungsverbinder wird das Herstellungsmaterial Metall verwendet.

Die US 4,330,142 offenbart einen Leitungsverbinder, der in seinem Rippenbereich mit einer Vielzahl von umfangsgemäßen Rippen oder Rillen und einer Vielzahl von in Längsrichtung verlaufenden Vorsprüngen ausgebildet ist und eine raue Oberfläche in diesem Bereich aufweist. Dabei besteht der Leitungsverbinder aus einem Kunststoffrohr, das durch radiale Verpressung die raue Oberfläche erhält.

Der vorliegenden Erfindung liegt die Aufgabe zu Grunde, einen Schlauchleitungsverbinder der beschriebenen, gattungsgemäßen Art so zu verbessern, dass bei vereinfachter Schlauchmontage dennoch eine optimale Schlauch-Halterung und - Abdichtung gewährleistet ist.

Erfindungsgemäß wird diese Aufgabe durch die Merkmale der unabhängigen Ansprüche 1, 2 und 3 gelöst. Ein Leitungssatz mit mindestens einem erfindungsgemäßen Schlauchleitungsverbinder ist Gegenstand des Anspruchs 16. Vorteilhafte Ausgestaltungsmerkmale der Erfindung sind in den abhängigen Ansprüchen sowie auch in der anschließenden Beschreibung enthalten.

Demnach ist erfindungsgemäß vorgesehen, dass der Halteabschnitt auf seinem zylindrischen Außenumfang eine radial vorstehende Rippenstruktur mit mindestens einer ringstegförmigen Umfangsrippe und/oder mindestens einer über den Umfang verteilt axial und/oder schräg zur Axialrichtung verlaufenden Längsrippe aufweist. In bevorzugter Ausgestaltung weist die Rippenstrucktur mindestens eine Umfangsrippe und mindestens zwei Längsrippen auf, wobei der Begriff "Längsrippen" bedeutet, dass diese zumindest anteilig in axialer oder achsparalleler Richtung und/oder gegebenenfalls anteilig schräg und somit auch anteilig, z. B. gewindeartig in Umfangsrichtung verlaufen. Es kann auch ein z. B. zickzackartiger oder mäanderartiger Verlauf der/jeder "Längsrippe" vorgesehen sein. Wesentlich dabei ist, dass durch die Rippenstruktur jeweils zwischen den Rippen kammerartige Vertiefungen gebildet sind. Der so ausgebildete Halteabschnitt gewährleistet eine sehr feste, sichere Schlauch-Befestigung, und zwar vorteilhafterweise auch mit nur einer radialen Klemmung im Bereich des Halteabschnittes, indem im radial geklemmten Zustand der Schlauchleitung deren Schlauchwandung unter elastischer Verformung auf die Rippenstruktur gepresst wird. Dadurch wird die Schlauchwandung bereichsweise in die jeweils zwischen den Rippen gebildeten, kammerartigen Vertiefungen gepresst, so dass die Schlauchwandung praktisch die Rippen bis zu dem ansonsten zylindrischen Umfang des Halteabschnittes umschließt und dadurch eine formschlüssige Verbindung erreicht wird. Dabei bewirkt die mindestens eine Umfangsrippe eine Halterung in axialer Richtung, und die Längsrippen sichern die Schlauchleitung gegen eine Verdrehung um die Stutzen-Längsachse.

Ohne diese erfindungsgemäße Verdrehsicherung, das heißt nur mit mindestens einer Umfangsrippe und ohne die erfindungsgemäßen Längsrippen, würden dann grundsätzlich mögliche Verdrehungen eine axiale Verschiebung der Leitung auf dem Schlauchstutzen begünstigen, so dass sich die Schlauchleitung zumindest geringfügig in Löse- bzw. Abziehrichtung über den Dichtabschnitt hinweg bewegen könnte. Da bei einer Herstellung als Kunststoff-Formteil der Schlauchstutzen im Bereich des Halteabschnittes axiale Formtrenngrate aufweist, die innerhalb der Schlauchleitung in die Wandung eindringen und dadurch Längsrillen bilden, könnten sich diese Längsrillen in den Bereich der Dichtfläche bewegen und dort axiale Leckagepfade über den Dichtabschnitt hinweg bilden.

Dies wird durch die vorliegende Erfindung sicher vermieden, indem die Leitung auch gegen Verdrehungen, die eine axiale Verschiebung begünstigen würden, sicher fixiert wird. Dadurch wird somit auch die innere Abdichtung der Schlauchleitung auf dem erfindungsgemäßen Schlauchstutzen verbessert, indem die Schlauchleitung gegen jegliche Bewegungen relativ zu dem Dichtabschnitt gesichert gehalten wird. Eine zweite radiale Klemmung im Bereich des Dichtabschnittes ist daher nicht erforderlich, was eine vereinfachte Schlauchmontage ermöglicht.

Außerdem führt die erfindungsgemäße Ausgestaltung mit der Rippenstruktur vorteilhafterweise auch zu einer mechanischen Versteifung des Schlauchstutzens, so dass erhöhte radiale Klemmkräfte möglich sind. Auch dies trägt zu der angestrebten guten mechanischen Halterung der Schlauchleitung bei.

Anhand der Zeichnung und darin veranschaulichter, bevorzugter Ausführungsbeispiele soll die Erfindung im Folgenden genauer erläutert werden. Dabei zeigen:
- Fig. 1: eine vergrößerte Seitenansicht eines erfindungsgemäßen Schlauchleitungsverbinders in einer ersten Ausführungsform,
- Fig. 2: einen axialen Längsschnitt in der Schnittebene II-II gemäß Fig. 1,
- Fig. 3: einen weiter vergrößerten Teil-Querschnitt in der Schnittebene III-III gemäß Fig. 1 sowie auch gemäß Fig. 5,
- Fig. 4: einen Teil-Axialschnitt in der Ebene IV-IV gemäß Fig. 3,
- Fig. 5: eine gegenüber Fig. 1 etwas verkleinerte Seitenansicht des erfindungsgemäßen Schlauchleitungsverbinders in einer zweiten Ausführung,
- Fig. 6: eine dritte Ausführungsform des erfindungsgemäßen Schlauchleitungsverbinders in einer Seitenansicht analog zu Fig. 1 und 5,
- Fig. 7: einen Längsschnitt in der Ebene VII-VII gemäß Fig. 6,
- Fig. 8: einen vergrößerten Querschnitt in der Ebene VIII-VIII gemäß Fig. 6,
- Fig. 9: einen Teil-Axialschnitt in der Ebene IX-IX gemäß Fig. 8,
- Fig. 10: eine weitere, vierte Ausführungsform des erfindungsgemäßen Verbinders wiederum Seitenansicht,
- Fig. 11: einen Längsschnitt in der Ebene XI-XI gemäß Fig. 10,
- Fig. 12: einen vergrößerten Querschnitt in der Ebene XII-XII gemäß Fig. 10,
- Fig. 13: einen Halb-Axialschnitt in der Ebene XIII-XIII gemäß Fig. 12,
- Fig. 14: eine Seitenansicht eines fünften Ausführungsbeispiels eines erfindungsgemäßen Leitungsverbinders,
- Fig. 15: einen Längsschnitt in der Ebene XV-XV gemäß Fig. 14,
- Fig. 16: einen vergrößerten Querschnitt in der Ebene XVI-XVI gemäß Fig. 14,
- Fig. 17: einen Halb-Axialschnitt in der Ebene XVII-XVII gemäß Fig. 16,
- Fig. 18: eine Seitenansicht eines Abschnittes eines erfindungsgemäßen Leitungssatzes mit einem Schlauchleitungsverbinder und einer aufgesteckten und mit einer Schlauchklemme geklemmten Schlauchleitung,
- Fig. 19: eine Ansicht des Leitungssatzes in Pfeilrichtung XIX gemäß Fig. 18,
- Fig. 20: einen Längsschnitt durch den erfindungsgemäßen Leitungssatz in der Ebene XX-XX gemäß Fig. 19,
- Fig. 21: eine Seitenansicht eines Leitungssatzes mit einer gekürzt dargestellten Schlauchleitung und zwei endseitigen erfindungsgemäßen Leitungsverbindern und
- Fig. 22 und 23: noch zwei weitere Ausführungsbeispiele eineserfindungsgemäßen Schlauchleitungsverbinders in Seitenansicht.

In den verschiedenen Figuren der Zeichnung sind gleiche Teile stets mit den gleichen Bezugszeichen versehen.

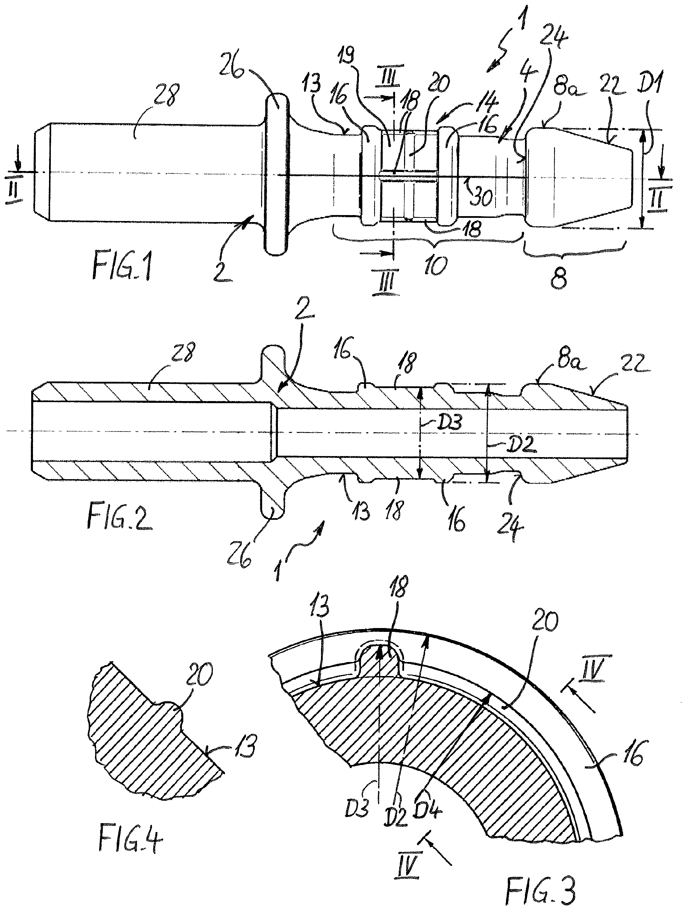

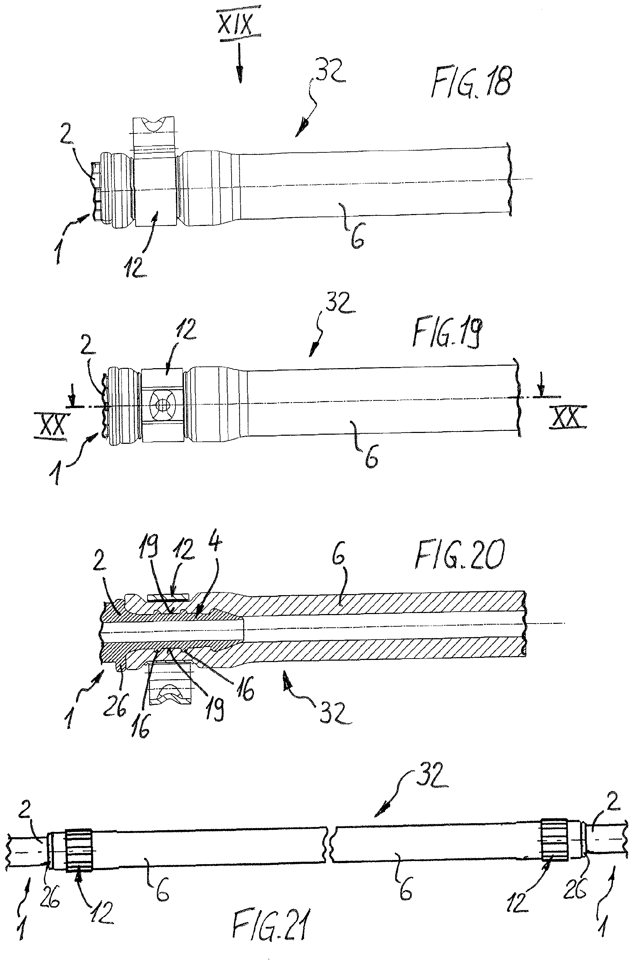

Zu der anschließenden Beschreibung wird ausdrücklich betont, dass die Erfindung nicht auf die Ausführungsbeispiele und dabei nicht auf alle oder mehrere Merkmale von beschriebenen Merkmalskombinationen beschränkt ist. Ein erfindungsgemäßer Schlauchleitungsverbinder 1 weist ein Anschlussteil 2 mit mindestens einem länglichen Schlauchstutzen 4 zum Aufstecken einer beispielhaft in Fig. 18 bis 21 dargestellten Schlauchleitung 6 auf. Das Anschlussteil 2 ist zusammen mit dem Schlauchstutzen 4 als einstückiges Formteil aus Kunststoff ausgebildet. Für das einstückige Formteil eignet sich besonders das Ausbilden aus zumindest einem Polymer, insbesondere einem Polyamid. Beispielsweise kann das einstückige Formteil aus PA12, PA612, PA1012, PA1010, PA610, PA11, PA66, PA6, oder PPA (Polyphthalamid), PPO (Polyphenylenoxid bzw. Polyether), PSU (Polysulfon), PES (Polyethersulfon), PPSU (Polyphenylensulfon), POM (Polyoxymethylen) oder PP (Polypropylen) bestehen. Ferner ist es möglich, dass das Material des einstückigen Formteils faserversträrkt ist, insbesondere glasfaserverstärkt. Bevorzugt eignet sich für das einstückige Formteil ein glasfaserverstärktes Polyamid, insbesondere PA12-GF 30.
Wie sich insbesondere aus den Seitenansichten in Fig. 1, 5, 6, 10 und 14 ergibt, weist der Schlauchstutzen 4 an einem freien vorderen Ende einen Dichtabschnitt 8 und axial im Anschluss daran einen Halteabschnitt 10 als Klemmbereich zum umfangsgemäßen radialen Klemmen der aufgesteckten Schlauchleitung 6 mittels einer geeigneten Schlauchklemme 12 auf; vergleiche dazu Fig. 18 bis 21. Der Dichtabschnitt 8 weist eine in Umfangsrichtung glatte, formgratfreie Dichtfläche 8a auf.

Erfindungsgemäß ist hierbei vorgesehen, dass der Halteabschnitt 10 auf seinem zylindrischen Außenumfang 13 eine radial vorstehende Rippenstruktur 14 mit mindestens einer ringstegförmigen Umfangsrippe 16 und mindestens einer über den Umfang verteilt axial und/oder schräg zur Axialrichtung verlaufenden Längsrippe 18 aufweist. Die Rippenstruktur 14 kann auch mindestens zwei Längsrippen 18 aufweisen, insbesondere - wie dargestellt - vier gleichmäßig über den Umfang verteilt angeordnete Längsrippen 18, so dass diese um jeweils 90° in Umfangsrichtung beabstandet sind.

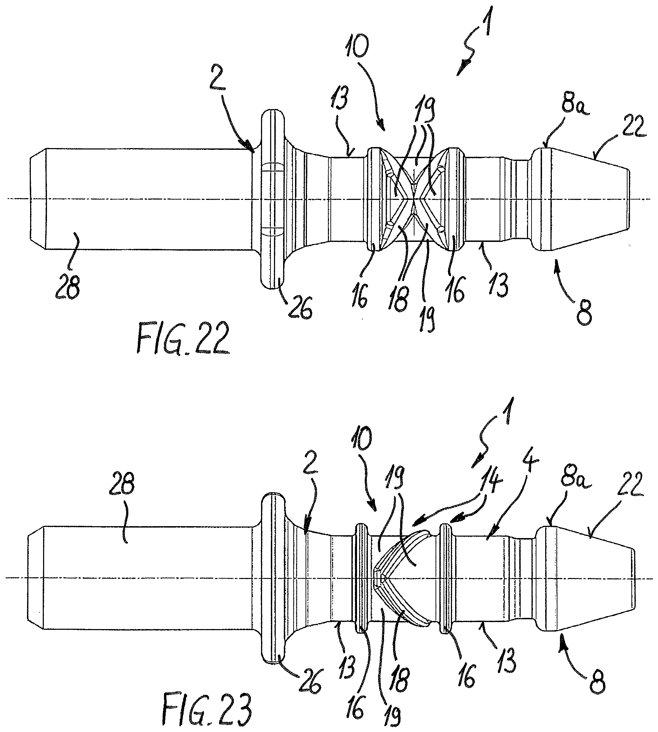

In den dargestellten Ausführungsbeispielen gemäß Fig. 1 bis 17 verlaufen die Längsrippen 18 jeweils in axialer bzw. achsparalleler Richtung. Alternativ oder zusätzlich können die Längsrippen 18 aber auch zumindest anteilig schräg zur Längsachse verlaufen, und zwar geradlinig oder auch in Form von Zickzack-Linien oder Wellenlinien. Zudem können sich beispielsweise auch jeweils mindestens zwei schräg verlaufende Längsrippen 18 kreuzen, wie dies in Fig. 22 beispielhaft dargestellt ist. Je nach Verlauf kann auch nur eine Längsrippe 18 ausreichen, wenn diese beispielsweise in Umfangsrichtung zickzackförmig und zwischen den Umfangsrippen 16 axial hin und her verläuft, siehe Fig. 23. Alternativ wäre auch ein mäanderartiger Verlauf denkbar. Wesentlich ist, dass alle Rippen 16, 18 der Rippenstruktur 14 zwischen sich kammerartige Vertiefungen 19 bilden, in die das Material der Schlauchwandung der Schlauchleitung 6 beim radialen Klemmen hineingepresst wird, siehe dazu insbesondere Fig. 20.

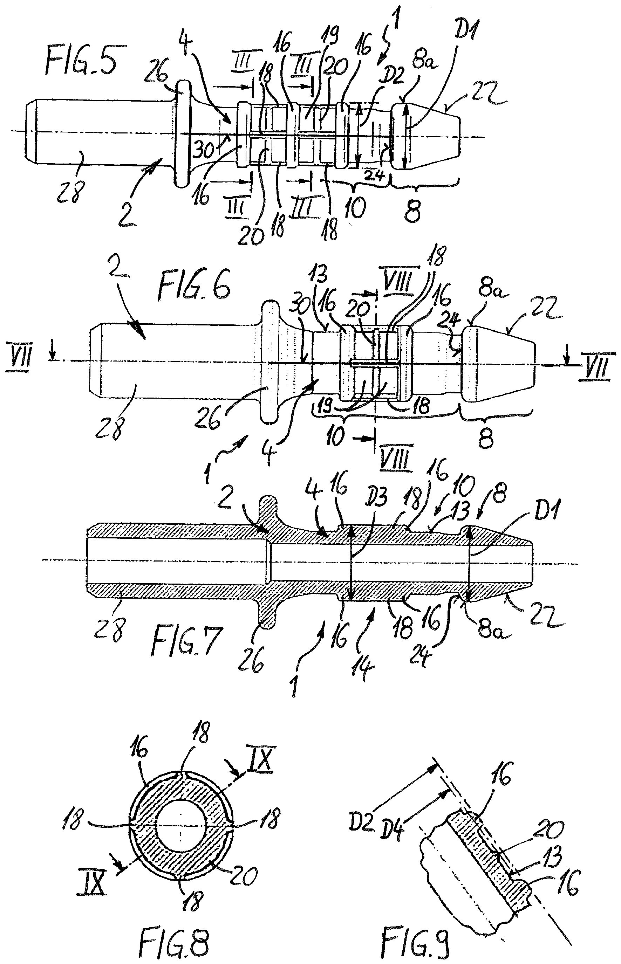

In den Ausführungsbeispielen gemäß Fig. 1 bis 13 sowie auch Fig. 22 und 23 weist die Rippenstruktur 14 mindestens zwei axial beabstandete Umfangsrippen 16 auf, wobei zwischen jeweils zwei axial benachbarten Umfangsrippen 16 die Längsrippen 18 angeordnet sind. Bei den Ausführungen gemäß Fig. 1 bis 4 und Fig. 6 bis 13 und 22, 23 weist die Rippenstruktur 14 genau zwei axial beabstandete Umfangsrippen 16 mit zwischen diesen verlaufenden und beidendig jeweils direkt oder mit geringem Abstand an die Umfangsrippen 16 anschließenden Längsrippen 18 auf. Bei der Ausführungsvariante gemäß Fig. 5 sind drei gleichmäßig axial beabstandete Umfangsrippen 16 vorgesehen, wobei zwischen jeweils zwei benachbarten Umfangsrippen 16 die Längsrippen 18 verlaufen. Somit ist hier praktisch eine zweifache Rippenstruktur mit gemeinsamer mittlerer Umfangsrippe 16 vorgesehen. Die mittlere Umfangsrippe 16 kann aber auch außermittig versetzt angeordnet sein.

Bei diesen Ausführungen gemäß Fig. 1 bis 13 ist zudem bevorzugt vorgesehen, dass zwischen jeweils zwei benachbarten Umfangsrippen 16 mindestens eine ringstegförmig in Umfangsrichtung verlaufende Zusatzrippe 20 angeordnet ist, die insbesondere mittig zwischen den Umfangsrippen 16 liegt.

Im Folgenden soll die geometrische Auslegung der Rippenstruktur 14 in Relation zu dem Dichtabschnitt 8 mit seiner Dichtfläche 8a beschrieben werden.

Der Dichtabschnitt 8 weist im Bereich seiner Dichtfläche 8a einen Außendurchmesser D1 auf, der so an den lichten Innendurchmesser der aufzusteckenden Schlauchleitung 6 angepasst ist, dass Letztere im aufgesteckten Zustand elastisch aufgeweitet wird und dadurch mit einer umfangsgemäßen radialen Anlagekraft zur inneren Abdichtung an der Dichtfläche 8a anliegt, siehe Fig. 20. Die Umfangsrippen 16 definieren einen Außendurchmesser D2. Die Längsrippen 18 definieren mit ihren Außenkanten gemeinsam als Umkreis einen Außendurchmesser D3. Schließlich weist die Zusatzrippe 20 einen Außendurchmesser D4 auf.

Bei der ersten Ausführung gemäß Fig. 1 bis 4 ist hierbei vorgesehen, dass der Außendurchmesser D2 der Umfangsrippen 16 gleich oder zumindest annähernd gleich dem Außendurchmesser D1 des Dichtabschnittes 8 im Bereich der Dichtfläche 8a ist. Der von den Längsrippen 18 definierte Außendurchmesser D3 ist geringfügig kleiner als der Außendurchmesser D2 der Umfangsrippen 16. Weiterhin ist der Außendurchmesser D4 der Zusatzrippe 20 nochmals geringfügig kleiner als der von den Längsrippen 18 definierte Außendurchmesser D3. Bei einer konkreten realisierten Ausführung betragen die Durchmesser-Differenzen zwischen D2 und D3 einerseits und zwischen D3 und D4 andererseits jeweils etwa 0,4 mm, entsprechend einer Radien-Differenz von etwa 0,2 mm. Die radial gemessene Höhe der Umfangsrippen 16 ausgehend von der Umfangsfläche 13 liegt im Bereich von 0,4 bis 0,8 mm und beträgt vorzugsweise etwa 0,6 mm. Die radiale Höhe der Längsrippen 18 ist um etwa 0,2 mm geringer und beträgt somit vorzugsweise etwa 0,4 mm. Die radiale Höhe der Zusatzrippe 20 ist nochmals um etwa 0,2 mm geringer, sie beträgt somit bevorzugt etwa 0,2 mm.
Die Ausführung gemäß Fig. 5 mit zwei gleichartigen, axial benachbarten Rippenstrukturen 14 entspricht hinsichtlich der Durchmesser-Auslegung der Ausführung gemäß Fig. 1 bis 4.

Bei der in Fig. 6 bis 9 veranschaulichten Ausführung entspricht wiederum der Außendurchmesser D2 der Umfangsrippen 16 zumindest annähernd dem Außendurchmesser D1 des Dichtabschnittes 8. Weiterhin entspricht hier auch der von den Längsrippen 18 definierte Außendurchmesser D3 dem Außendurchmesser D2 der Umfangsrippen 16. Lediglich der Außendurchmesser D4 der Zusatzrippe 20 ist geringfügig kleiner, und zwar bevorzugt um etwa 0,4 mm, was einer Radius-Differenz von etwa 0,2 mm entspricht.

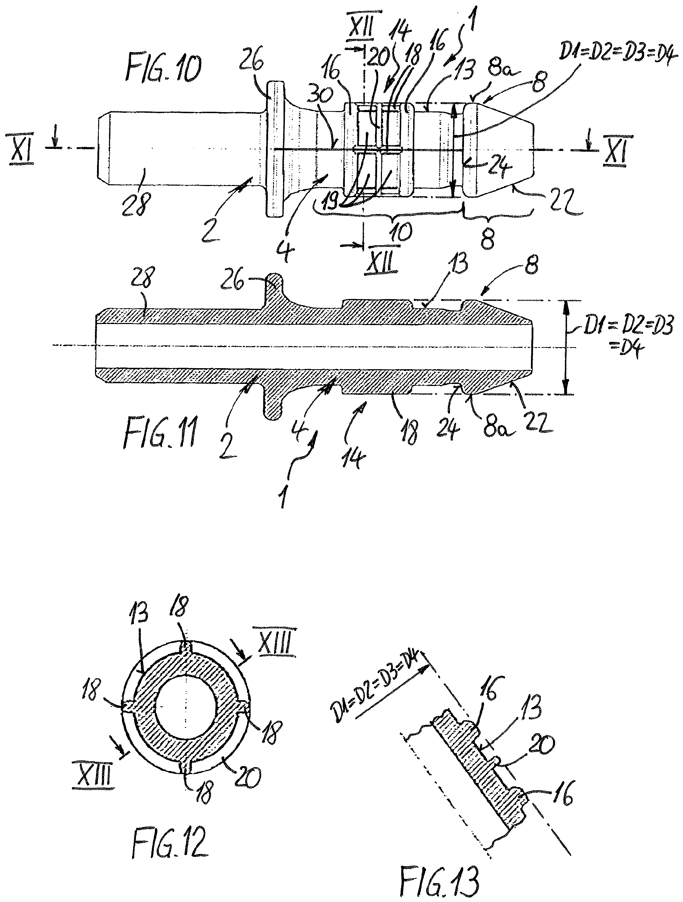

Bei der Ausführung gemäß Fig. 10 bis 13 sind alle genannten Durchmesser D1, D2, D3 und D4 zumindest annähernd gleich groß.

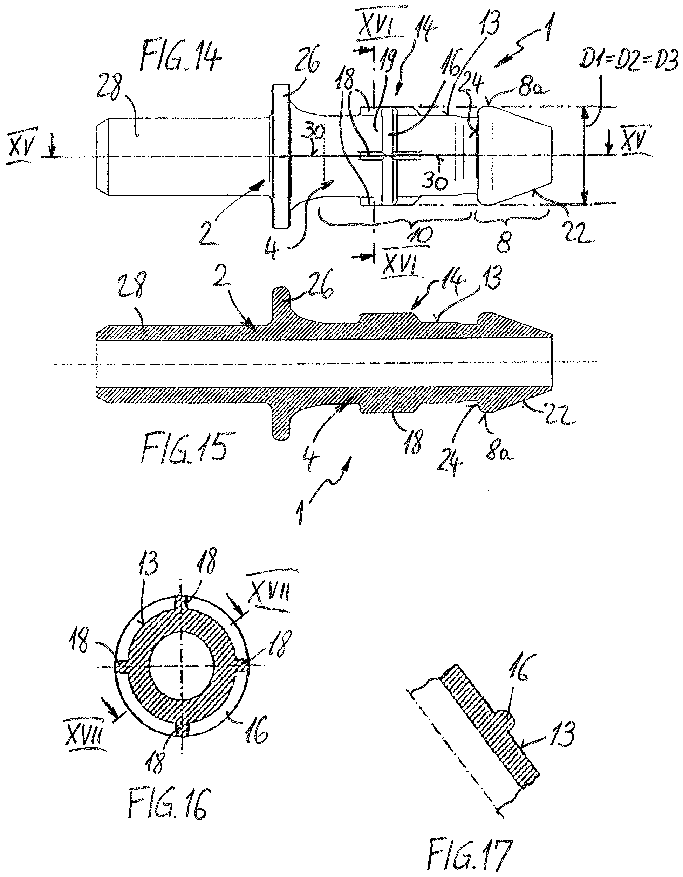

Was noch die Ausführung gemäß Fig. 14 bis 17 betrifft, so weist hierbei die Rippenstruktur 14 nur eine Umfangsrippe 16 auf, die vorzugsweise im axial mittigen Bereich der Längsrippen 18 angeordnet ist. Folglich erstrecken sich die Längsrippen 18 jeweils anteilig auf beiden Seiten der Umfangsrippe 16 von dieser weg. Bei diesem Ausführungsbeispiel sind wiederum der Außendurchmesser D1 der Dichtfläche 8a und der Außendurchmesser D2 der Umfangsrippe 16 gleich oder zumindest annähernd gleich. Außerdem ist auch der von den Längsrippen 18 definierte Außendurchmesser D3 zumindest annähernd gleich dem Außendurchmesser D2 der Umfangsrippe 16.

In allen Ausführungen erstreckt sich die Rippenstruktur 14 über einen axialen Längenbereich des Schlauchstutzens 4 hinweg, der derart in Anpassung an die axial gemessene Breite einer zum Klemmen einer aufgesteckten Schlauchleitung 6 zu verwendenden Schlauchklemme 12 ausgelegt ist, dass die Rippenstruktur 14 die Schlauchklemme 12 mittelbar über die Schlauchleitung 6 gegen Verkippen relativ zur Stutzen-Längsachse abstützt. Bei den Ausführungen gemäß Fig. 1 bis 13 wird dies hauptsächlich durch die äußeren Umfangsrippen 16 gewährleistet. Deshalb können die übrigen Rippen 18 und/oder 20 mit geringeren Durchmessern D3, D4 ausgebildet sein, wie es gemäß Fig. 1 bis 5 und hinsichtlich der Zusatzrippe 20 auch bei Fig. 6 bis 9 der Fall ist. Bei der Ausführung gemäß Fig. 14 bis 17 mit nur einer mittigen Umfangsrippe 16 wird die Kipp-Abstützung aber durch die mit gleichem Durchmesser und entsprechender Länge ausgebildeten Längsrippen 18 gewährleistet.

Wie beispielhaft bei den Ausführungen gemäß Fig. 6 bis 17 veranschaulicht ist, kann die Dichtfläche 8a des Dichtabschnittes 8 als so genannte Dichtlinse mit einer im Längsschnitt konvex gewölbten Flächenkontur ausgebildet sein. Bei den Ausführungen gemäß Fig. 1 bis 5 weist die Dichtfläche 8a des Dichtabschnittes 8 einen axial verlängerten zylindrischen oder geringfügig konischen Flächenabschnitt auf. Der Begriff "geringfügig konisch" bedeutet, dass die Dichtfläche 8a sich wegen einer axialen Entformung zum freien Ende hin mit einer Formschräge von beispielsweise 0° bis 3° verjüngt. Die Länge des zylindrischen oder geringfügig konischen Flächenabschnittes der Dichtfläche 8a beträgt in einer realisierten Ausführung 0,5 mm bis 2,0 mm, insbesondere etwa 1,0 mm.

Außerdem weist der Dichtabschnitt 8 am freien Ende eine konische Einführschrägfläche 22 auf, die das Aufstecken der Schlauchleitung 6 erleichtert, indem die Schlauchleitung 6 beim Aufstecken über die Einführschrägfläche 22 hinweg elastisch aufgeweitet wird.

Der Dichtabschnitt 8 bzw. die Dichtfläche 8a geht über eine radiale, den Durchmesser reduzierende Stufe 24 in den Halteabschnitt 10 und dessen zunächst zylindrische Umfangsfläche 13 über.

Es sei noch erwähnt, dass der Schlauchstutzen 4 in seinem dem freien Ende und dem Dichtabschnitt 8 gegenüberliegenden Bereich im Anschluss an den Halteabschnitt 10 ein Anschlagelement 26 zur Aufsteckbegrenzung für die aufzusteckende Schlauchleitung 6 aufweist. Dieses Anschlagelement 26 kann mit Vorteil durch einen Umfangsringsteg gebildet sein.

Das Anschlussteil 2 kann auf der dem Dichtabschnitt 8 gegenüberliegenden Seite im Anschluss an den Schlauchstutzen 4 und das Anschlagelement 26 einen beliebigen Verbindungsabschnitt 28 aufweisen, wie dargestellt beispielsweise in Form eines zylindrischen Anschlusszapfens. Der Schlauchstutzen 4 kann aber auch einteilig mit einem beliebigen anderen Anschlussteil oder einem beliebigen Aggregat verbunden sein.

Wie oben bereits erwähnt wurde, ist das Anschlussteil 2 zusammen mit dem Schlauchstutzen 4 als Kunststoff-Formteil ausgebildet. Dazu wird der Dichtabschnitt 8 bis zu der radialen Stufe 24 am Übergang zu dem Halteabschnitt 10 mit axialer Entformung und dadurch auf der Dichtfläche 8a und auf der Einführschrägfläche 22 frei von Formgraten gebildet, während im übrigen Bereich durch eine radiale Entformung axial verlaufende Formgrate 30 gebildet sind, wie es in den Seitenansichten jeweils eingezeichnet ist. Dabei wird eine Form-Teilungsebene so gewählt, dass die Formgrate 30 axial über die Rippenstruktur 14 und insbesondere über zwei diametral gegenüberliegende, axiale Längsrippen 18 hinweg verlaufen. Dadurch tragen auch die Formgrate 30 zu einer sicheren Halterung der Schlauchleitung 6 insbesondere zur Sicherung gegen Verdrehungen bei.

In den Fig. 18 bis 19 ist noch jeweils zumindest abschnittsweise ein Leitungssatz 32 veranschaulicht, der aus einer Schlauchleitung 6 und mindestens einem endseitigen erfindungsgemäßen Schlauchleitungsverbinder 1 besteht. Das jeweilige, unter bereichsweiser radial elastischer Aufdehnung auf den Schlauchstutzen 4 aufgesteckte Leitungsende ist im Bereich des Halteabschnittes 10 mittels einer Schlauchklemme 12 radial geklemmt. Gemäß Fig. 18 bis 20 kann die Schlauchklemme 12 als so genannte Einohrschelle ausgebildet sein. In Fig. 21 sind beispielhaft als Schlauchklemmen 12 so genannte Quetschhülsen dargestellt. Wegen der erfindungsgemäßen Rippenstruktur 14 und der dadurch erreichten mechanischen Versteifung des Schlauchstutzens 4 kann eine hohe Klemm- oder Quetschkraft aufgebracht werden, die vorzugsweise um 15 % bis 20 % höher ist als bei einem herkömmlichen Schlaustutzen ohne die erfindungsgemäße Rippenstruktur 14, bei gleicher radialer Verformung der Stutzenwandung.

## Patentansprüche

1. Schlauchleitungsverbinder (1) mit einem Anschlussteil (2) mit mindestens einem länglichen Schlauchstutzen (4) zum Aufstecken einer Schlauchleitung (6), wobei der Schlauchstutzen (4) an einem freien vorderen Ende einen Dichtabschnitt (8) mit einer umfangsgemäßen Dichtfläche (8a) und axial im Anschluss daran einen Halteabschnitt (10) als Klemmbereich zum umfangsgemäßen radialen Klemmen einer aufgesteckten Schlauchleitung (6) aufweist, wobei der Halteabschnitt (10) auf seinem Außenumfang eine radial vorstehende Rippenstruktur (14) mit mehreren ringstegförmigen Umfangsrippen (16) und mindestens zwei über den Umfang verteilt angeordneten, axialverlaufenden Längsrippen (18) aufweist, wobei der Dichtabschnitt (8) über eine radiale, den Durchmesser reduzierende Stufe (24) in den Halteabschnitt (10) übergeht,
**dadurch gekennzeichnet, dass** das Anschlussteil (2) mit dem Schlauchstutzen (4) als einstückiges Kunststoff-Formteil ausgebildet ist, wobei der Dichtabschnitt (8) bis zu der radialen Stufe (24) am Übergang zu dem Halteabschnitt (10) mit axialer Entformung und dadurch umfangsgemäß glatt, frei von Formtrenngraten und der übrige Bereich des Schlauchstutzens (4) mit radialer Entformung und dadurch mit axial verlaufenden Formtrenngraten (30) ausgebildet ist, und wobei die Rippenstruktur (14) mindestens zwei axial beabstandete Umfangsrippen (16) mit dem gleichen Außendurchmesser (D2) aufweist, wobei zwischen jeweils zwei benachbarten Umfangsrippen (16) die einen gleichen Außendurchmesser (D3) aufweisenden Längsrippen (18) verlaufen, die sich an die Umfangsrippen (16) anschließen, und wobei durch die Rippenstruktur (14) jeweils zwischen den Längs- und Umfangsrippen (16, 18) kammerartige, bis zum ansonsten zylindrischen Umfang des Halteabschnitts (10) reichende Vertiefungen gebildet sind, und die Formtrenngrate (30) axial über die Rippenstruktur (14) hinweg verlaufen.

2. Schlauchleitungsverbinder (1) mit einem Anschlussteil (2) mit mindestens einem länglichen Schlauchstutzen (4) zum Aufstecken einer Schlauchleitung (6), wobei der Schlauchstutzen (4) an einem freien vorderen Ende einen Dichtabschnitt (8) mit einer umfangsgemäßen Dichtfläche (8a) und axial im Anschluss daran einen Halteabschnitt (10) als Klemmbereich zum umfangsgemäßen radialen Klemmen einer aufgesteckten Schlauchleitung (6) aufweist, wobei der Halteabschnitt (10) auf seinem Außenumfang eine radial vorstehende Rippenstruktur (14) mit mehreren ringstegförmigen Umfangsrippen (16), und in Axialrichtung verlaufenden Längsrippen (18) aufweist, wobei der Dichtabschnitt (8) über eine radiale, den Durchmesser reduzierende Stufe (24) in den Halteabschnitt (10) übergeht,
**dadurch gekennzeichnet, dass** das Anschlussteil (2) mit dem Schlauchstutzen (4) als einstückiges Kunststoff-Formteil ausgebildet ist, wobei der Dichtabschnitt (8) bis zu der radialen Stufe (24) am Übergang zu dem Halteabschnitt (10) mit axialer Entformung und dadurch umfangsgemäß glatt, frei von Formtrenngraten und der übrige Bereich des Schlauchstutzens (4) mit radialer Entformung und dadurch mit axial verlaufenden Formtrenngraten (30) ausgebildet ist, und wobei die radial vorstehende Rippenstruktur (14) mindestens zwei axial beabstandete Umfangsrippen (16) mit dem gleichen Außendurchmesser (D2) aufweist, wobei zwischen jeweils zwei benachbarten Umfangsrippen (16) die zumindest anteilig schräg zur Längsachse verlaufenden, einen gleichen Außendurchmesser (D3) aufweisenden Längsrippen (18) angeordnet sind, wobei durch die Rippenstruktur (14) jeweils zwischen den Umfangs- und Längsrippen (16, 18) kammerartige, bis zum ansonsten zylindrischen Umfang des Halteabschnitts (10) reichende Vertiefungen gebildet sind, wobei die Formtrenngrate (30) axial über die Rippenstruktur (14) hinweg verlaufen.

3. Schlauchleitungsverbinder (1) mit einem Anschlussteil (2) mit mindestens einem länglichen Schlauchstutzen (4) zum Aufstecken einer Schlauchleitung (6), wobei der Schlauchstutzen (4) an einem freien vorderen Ende einen Dichtabschnitt (8) mit einer umfangsgemäßen Dichtfläche (8a) und axial im Anschluss daran einen Halteabschnitt (10) als Klemmbereich zum umfangsgemäßen radialen Klemmen einer aufgesteckten Schlauchleitung (6) aufweist, wobei der Halteabschnitt (10) auf seinem Außenumfang eine radial vorstehende Rippenstruktur (14) mit mehreren axialverlaufenden ringstegförmigen Längsrippen (18) aufweist, wobei der Dichtabschnitt (8) über eine radiale, den Durchmesser reduzierende Stufe (24) in den Halteabschnitt (10) übergeht,
**dadurch gekennzeichnet, dass** das Anschlussteil (2) mit dem Schlauchstutzen (4) als einstückiges Kunststoff-Formteil ausgebildet ist, wobei der Dichtabschnitt (8) bis zu der radialen Stufe (24) am Übergang zu dem Halteabschnitt (10) mit axialer Entformung und dadurch umfangsgemäß glatt, frei von Formtrenngraten und der übrige Bereich des Schlauchstutzens mit radialer Entformung und dadurch mit axial verlaufenden Formtrenngraten (30) ausgebildet ist, wobei die Rippenstruktur (14) nur eine Umfangsrippe (16) aufweist, und die einen gleichen Außendurchmesser (D3) aufweisenden Längsrippen (18) sich jeweils anteilig auf beiden Seiten der Umfangsrippe (16) von dieser weg erstrecken, wobei durch die Rippenstruktur (14) jeweils zwischen den Umfangs- und Längsrippen (16, 18) kammerartige, bis zum ansonsten zylindrischen Umfang des Halteabschnitts (10) reichende Vertiefungen gebildet sind, wobei die Formtrenngrate (30) axial über dieRippenstruktur (14) hinweg verlaufen.

4. Schlauchleitungsverbinder nach Anspruch 1 oder 2,
**dadurch gekennzeichnet, dass** die Rippenstruktur (14) mindestens zwei, insbesondere vier, gleichmäßig über den Umfang verteilt angeordnete Längsrippen (18) aufweist.

5. Schlauchleitungsverbinder nach Anspruch 1,
**dadurch gekennzeichnet, dass** zwischen jeweils zwei benachbarten Umfangsrippen (16) mindestens eine ringstegförmig in Umfangsrichtung verlaufende Zusatzrippe (20) - insbesondere mittig zwischen den Umfangsrippen (16) - angeordnet ist.

6. Schlauchleitungsverbinder nach einem der Ansprüche 1 bis 5,
**dadurch gekennzeichnet, dass** die Umfangsrippen (16) einen Außendurchmesser (D2) aufweisen, der einem Außendurchmesser (D1) der Dichtfläche (8a) des Dichtabschnittes (8) zumindest annähernd entspricht.

7. Schlauchleitungsverbinder nach einem der Ansprüche 1 bis 6,
**dadurch gekennzeichnet, dass** die Längsrippen (18) gemeinsam mit ihren Außenkanten einen Außendurchmesser (D3) definieren, der kleiner/gleich dem Außendurchmesser (D2) der Umfangsrippen (16)

8. Schlauchleitungsverbinder nach einem der Ansprüche 5 bis 7,
**dadurch gekennzeichnet, dass** die Zusatzrippe (20) einen Außendurchmesser (D4) aufweist, der kleiner/gleich dem von den Längsrippen (18) definierten Außendurchmesser (D3) ist.

9. Schlauchleitungsverbinder nach Anspruch 3,
**dadurch gekennzeichnet, dass** die Längsrippen (18) mit ihren Außenkanten gemeinsam einen Außendurchmesser (D3) definieren, der gleich dem Außendurchmesser (D2) der Umfangsrippe (16) ist, wobei der Außendurchmesser (D2) der Umfangsrippe (16) bevorzugt dem Außendurchmesser (D1) der Dichtfläche (8a) des Dichtabschnittes (8) zumindest annähernd entspricht.

10. Schlauchleitungsverbinder nach einem der Ansprüche 1 bis 9,
**dadurch gekennzeichnet, dass** sich die Rippenstruktur (14) über einen axialen Längenbereich hinweg erstreckt, der derart in Anpassung an die axial gemessene Breite einer zum Klemmen einer aufgesteckten Schlauchleitung (6) zu verwendenden Schlauchklemme (12) ausgelegt ist, dass die Rippenstruktur (14) die Schlauchklemme (12) gegen Verkippen relativ zur Stutzen-Längsachse abstützt.

11. Schlauchleitungsverbinder nach einem der Ansprüche 1 bis 10,
**dadurch gekennzeichnet, dass** die Dichtfläche (8a) des Dichtabschnittes (8) als so genannte Dichtlinse mit einer im Längsschnitt konvex gewölbten Flächenkontur ausgebildet ist.

12. Schlauchleitungsverbinder nach einem der Ansprüche 1 bis 11,
**dadurch gekennzeichnet, dass** die Dichtfläche (8a) des Dichtabschnittes (8) einen zylindrischen Flächenabschnitt aufweist.

13. Schlauchleitungsverbinder nach einem der Ansprüche 1 bis 12,
**dadurch gekennzeichnet, dass** der Dichtabschnitt (8) am freien Ende eine konische Einführschrägfläche (22) aufweist.

14. Schlauchleitungsverbinder nach einem der Ansprüche 1 bis 13,
**dadurch gekennzeichnet, dass** der Schlauchstutzen (4) in seinem dem freien Ende gegenüberliegenden Bereich im Anschluss an den Halteabschnitt (10) ein Anschlagelement (26) zur Aufsteckbegrenzung für die aufzusteckende Schlauchleitung (6) aufweist.

15. Schlauchleitungsverbinder nach einem der Ansprüche 1 bis 14,
**dadurch gekennzeichnet, dass** das Anschlussteil (2) mit dem Schlauchstutzen (4) als einstückiges Kunststoff-Formteil aus einem faserverstärkten Polyamid ausgebildet ist, wobei die Formtrenngrate (30) über zwei diametral gegenüberliegende, axiale Längsrippen (18) hinweg verlaufen.

16. Leitungssatz (32) mit einer Schlauchleitung (6) und einem oder zwei Schlauchleitungsverbindern (1) nach einem der Ansprüche 1 bis 15, wobei der/jeder Schlauchleitungsverbinder (1) mit seinem Schlauchstutzen (4) in ein Leitungsende der Schlauchleitung (6) eingesteckt ist, wobei die Schlauchleitung (6) im Bereich des Halteabschnittes (10) und der Rippenstruktur (14) des/jedes Schlauchstutzens (4) mit einer Schlauchklemme (12) umfangsgemäß radial geklemmt ist.

17. Leitungssatz nach Anspruch 16,
**dadurch gekennzeichnet, dass** die/jede Schlauchklemme (12) als so genannten Einohrschelle oder als Quetschhülse ausgebildet ist.

## Claims

1. Hose line connector (1) having a connection part (2) with at least one elongate hose connection piece (4) for plugging on a hose line (6), wherein the hose connection piece (4) has, at a free front end, a sealing portion (8) with a circumferential sealing surface (8a) and, axially adjoining the latter, a retaining portion (10) as a clamping region for the circumferential radial clamping of a plugged-on hose line (6), wherein the retaining portion (10) has, on its outer circumference, a radially protruding rib structure (14) with a plurality of circumferential ribs (16) in the form of annular ridges, and at least two axially extending longitudinal ribs (18) that are arranged in a manner distributed around the circumference, wherein the sealing portion (8) merges into the retaining portion (10) via a radial step (24) that reduces the diameter,
**characterized in that** the connection part (2) with the hose connection piece (4) is formed as an integral plastics moulding, wherein the sealing portion (8) is formed, as far as the radial step (24) at the transition to the retaining portion (10), with axial demoulding, and as a result is circumferentially smooth and free of flashing, and the remaining region of the hose connection piece (4) is formed with radial demoulding and as a result with axially extending flashing (30), and wherein the rib structure (14) has at least two axially spaced-apart circumferential ribs (16) with the same outside diameter (D2), wherein longitudinal ribs (18) that have an identical outside diameter (D3) extend between in each case two adjacent circumferential ribs (16), said longitudinal ribs (18) adjoining the circumferential ribs (16), and wherein chamber-like depressions that extend as far as the otherwise cylindrical circumference of the retaining portion (10) are formed by the rib structure (14) in each case between the longitudinal and circumferential ribs (16, 18), and the flashing (30) extends axially over the rib structure (14).

2. Hose line connector (1) having a connection part (2) with at least one elongate hose connection piece (4) for plugging on a hose line (6), wherein the hose connection piece (4) has, at a free front end, a sealing portion (8) with a circumferential sealing surface (8a) and, axially adjoining the latter, a retaining portion (10) as a clamping region for the circumferential radial clamping of a plugged-on hose line (6), wherein the retaining portion (10) has, on its outer circumference, a radially protruding rib structure (14) with a plurality of circumferential ribs (16) in the form of annular ridges, and longitudinal ribs (18) that extend in an axial direction, wherein the sealing portion (8) merges into the retaining portion (10) via a radial step (24) that reduces the diameter,
**characterized in that** the connection part (2) with the hose connection piece (4) is formed as an integral plastics moulding, wherein the sealing portion (8) is formed, as far as the radial step (24) at the transition to the retaining portion (10), with axial demoulding, and as a result is circumferentially smooth and free of flashing, and the remaining region of the hose connection piece (4) is formed with radial demoulding and as a result with axially extending flashing (30), and wherein the radially protruding rib structure (14) has at least two axially spaced-apart circumferential ribs (16) with the same outside diameter (D2), wherein longitudinal ribs (18) that extend at least in part obliquely to the longitudinal axis and have an identical outside diameter (D3) are arranged between in each case two adjacent circumferential ribs (16), wherein chamber-like depressions that extend as far as the otherwise cylindrical circumference of the retaining portion (10) are formed by the rib structure (14) in each case between the circumferential and longitudinal ribs (16, 18), wherein the flashing (30) extends axially over the rib structure (14).

3. Hose line connector (1) having a connection part (2) with at least one elongate hose connection piece (4) for plugging on a hose line (6), wherein the hose connection piece (4) has, at a free front end, a sealing portion (8) with a circumferential sealing surface (8a) and, axially adjoining the latter, a retaining portion (10) as a clamping region for the circumferential radial clamping of a plugged-on hose line (6), wherein the retaining portion (10), on its outer circumference, has a radially protruding rib structure (14) with a plurality of axially extending longitudinal ribs (18), wherein the sealing portion (8) merges into the retaining portion (10) via a radial step (24) that reduces the diameter,
**characterized in that** the connection part (2) with the hose connection piece (4) is formed as an integral plastics moulding, wherein the sealing portion (8) is formed, as far as the radial step (24) at the transition to the retaining portion (10), with axial demoulding, and as a result is circumferentially smooth and free of flashing, and the remaining region of the hose connection piece (4) is formed with radial demoulding and as a result with axially extending flashing (30), wherein the rib structure (14) has only one circumferential rib (16), and the longitudinal ribs (18) that have an identical outside diameter (D3) extend away from the circumferential rib (16) in each case in part on both sides of the latter, wherein chamber-like depressions that extend as far as the otherwise cylindrical circumference of the retaining portion (10) are formed by the rib structure (14) in each case between the circumferential and longitudinal ribs (16, 18), wherein the flashing (30) extends axially over the rib structure (14).

4. Hose line connector according to Claim 1 or 2,
**characterized in that** the rib structure (14) has at least two, in particular four, longitudinal ribs (18) arranged in a manner distributed regularly around the circumference.

5. Hose line connector according to Claim 1,
**characterized in that** at least one additional rib (20) that extends in the circumferential direction in the form of an annular ridge is arranged between in each case two adjacent circumferential ribs (16) - in particular centrally between the circumferential ribs (16).

6. Hose line connector according to one of Claims 1 to 5,
**characterized in that** the circumferential ribs (16) have an outside diameter (D2) which corresponds at least approximately to an outside diameter (D1) of the sealing surface (8a) of the sealing portion (8).

7. Hose line connector according to one of Claims 1 to 6,
**characterized in that** the longitudinal ribs (18) define, together with their outer edges, an outside diameter (D3) which is less than/equal to the outside diameter (D2) of the circumferential ribs (16).

8. Hose line connector according to one of Claims 5 to 7,
**characterized in that** the additional rib (20) has an outside diameter (D4) which is less than/equal to the outside diameter (D3) defined by the longitudinal ribs (18).

9. Hose line connector according to Claim 3,
**characterized in that** the longitudinal ribs (18) define, together with their outer edges, an outside diameter (D3) which is equal to the outside diameter (D2) of the circumferential rib (16), wherein the outside diameter (D2) of the circumferential rib (16) preferably corresponds at least approximately to the outside diameter (D1) of the sealing surface (8a) of the sealing portion (8).

10. Hose line connector according to one of Claims 1 to 9,
**characterized in that** the rib structure (14) extends over an axial length region which is designed to match the axially measured width of a hose clamp (12) to be used to clamp a plugged-on hose line (6), in such a way that the rib structure (14) supports the hose clamp (12) against tilting relative to the connection piece longitudinal axis.

11. Hose line connector according to one of Claims 1 to 10,
**characterized in that** the sealing surface (8a) of the sealing portion (8) is in the form of what is known as a sealing lens having a surface contour that is curved in a convex manner in longitudinal section.

12. Hose line connector according to one of Claims 1 to 11,
**characterized in that** the sealing surface (8a) of the sealing portion (8) has a cylindrical surface portion.

13. Hose line connector according to one of Claims 1 to 12,
**characterized in that** the sealing portion (8) has a conical sloping introduction surface (22) at its free end.

14. Hose line connector according to one of Claims 1 to 13,
**characterized in that** the hose connection piece (4) has, in its region opposite the free end, adjoining the retaining portion (10), a stop element (26) for limiting the plugging on of the hose line (6) to be plugged on.

15. Hose line connector according to one of Claims 1 to 14,
**characterized in that** the connection part (2) with the hose connection piece (4) is formed as an integral plastics moulding made of a fibre-reinforced polyamide, wherein the flashing (30) extends over two diametrically opposed, axial longitudinal ribs (18).

16. Line set (32) having a hose line (6) and one or two hose line connectors (1) according to one of Claims 1 to 15, wherein the/each hose line connector (1) is plugged by way of its hose connection piece (4) into a line end of the hose line (6), wherein the hose line (6) is circumferentially radially clamped with a hose clamp (12) in the region of the retaining portion (10) and of the rib structure (14) of the/each hose connection piece (4).

17. Line set according to Claim 16,
**characterized in that** the/each hose clamp (12) is in the form of what is known as a one-ear clamp or as a crimp sleeve.

## Revendications

1. Raccord de conduite tubulaire (1) comprenant une partie de raccordement (2) avec au moins une tubulure de tuyau allongée (4) destinée à permettre l'enfichage d'une conduite tubulaire (6), la tubulure de tuyau (4) présentant à une extrémité avant libre une portion d'étanchéité (8) avec une surface d'étanchéité périphérique (8a) et, se raccordant axialement à celle-ci, une portion de retenue (10) en tant que région de serrage pour le serrage radial périphérique d'une conduite tubulaire enfichée (6), la portion de retenue (10) présentant sur sa périphérie extérieure une structure nervurée saillant radialement (14) avec plusieurs nervures périphériques (16) en forme de nervures annulaires et au moins deux nervures longitudinales s'étendant axialement (18) disposées de manière répartie sur la périphérie, la portion d'étanchéité (8) se prolongeant dans la portion de retenue (10) par le biais d'un gradin radial (24) réduisant le diamètre, **caractérisé en ce que** la partie de raccordement (2) est réalisée avec la tubulure de tuyau (4) sous forme de pièce moulée en plastique d'une seule pièce, la portion d'étanchéité (8) étant réalisée jusqu'à l'étage radial (24) au niveau de la transition avec la portion de retenue (10) avec démoulage axial et de ce fait sous forme lisse sur la périphérie, sans bavure de séparation de moulage, et le reste de la région de la tubulure de tuyau (4) étant réalisé avec démoulage radial et de ce fait avec des bavures de séparation de moulage (30) s'étendant axialement, et la structure nervurée (14) présentant au moins deux nervures périphériques espacées axialement (16) ayant le même diamètre extérieur (D2), les nervures longitudinales (18) présentant un diamètre extérieur identique (D3) s'étendant à chaque fois entre deux nervures périphériques adjacentes (16), lesquelles nervures longitudinales se raccordent aux nervures périphériques (16), et des renfoncements en forme de chambre, s'étendant jusqu'à la périphérie par ailleurs cylindrique de la portion de retenue (10), étant formés par la structure nervurée (14) à chaque fois entre les nervures périphériques et les nervures longitudinales (16, 18), et les bavures de séparation de moulage (30) s'étendant axialement au-delà de la structure nervurée (14).

2. Raccord de conduite tubulaire (1) comprenant une partie de raccordement (2) avec au moins une tubulure de tuyau allongée (4) destinée à permettre l'enfichage d'une conduite tubulaire (6), la tubulure de tuyau (4) présentant à une extrémité avant libre une portion d'étanchéité (8) avec une surface d'étanchéité périphérique (8a) et, se raccordant axialement à celle-ci, une portion de retenue (10) en tant que région de serrage pour le serrage radial périphérique d'une conduite tubulaire enfichée (6), la portion de retenue (10) présentant sur sa périphérie extérieure une structure nervurée saillant radialement (14) avec plusieurs nervures périphériques (16) en forme de nervures annulaires et des nervures longitudinales (18) s'étendant dans la direction axiale, la portion d'étanchéité (8) se prolongeant dans la portion de retenue (10) par le biais d'un gradin (24) réduisant le diamètre,
**caractérisé en ce que** la partie de raccordement (2) est réalisée avec la tubulure de tuyau (4) sous forme de pièce moulée en plastique d'une seule pièce, la portion d'étanchéité (8) étant réalisée jusqu'à l'étage radial (24) au niveau de la transition avec la portion de retenue (10) avec démoulage axial et de ce fait sous forme lisse sur la périphérie, sans bavure de séparation de moulage, et le reste de la région de la tubulure de tuyau (4) étant réalisé avec démoulage radial et de ce fait avec des bavures de séparation de moulage (30) s'étendant axialement, et la structure nervurée (14) s'étendant radialement présentant au moins deux nervures périphériques espacées axialement (16) ayant le même diamètre extérieur (D2), les nervures longitudinales (18) présentant un diamètre extérieur identique (D3), s'étendant au moins en partie obliquement par rapport à l'axe longitudinal, étant disposées à chaque fois entre deux nervures périphériques adjacentes (16), des renfoncements en forme de chambre, s'étendant jusqu'à la périphérie par ailleurs cylindrique de la portion de retenue (10), étant formés par la structure nervurée (14) à chaque fois entre les nervures périphériques et les nervures longitudinales (16, 18), les bavures de séparation de moulage (30) s'étendant axialement au-delà de la structure nervurée (14).

3. Raccord de conduite tubulaire (1) comprenant une partie de raccordement (2) avec au moins une tubulure de tuyau allongée (4) destinée à permettre l'enfichage d'une conduite tubulaire (6), la tubulure de tuyau (4) présentant à une extrémité avant libre une portion d'étanchéité (8) avec une surface d'étanchéité périphérique (8a) et, se raccordant axialement à celle-ci, une portion de retenue (10) en tant que région de serrage pour le serrage radial périphérique d'une conduite tubulaire enfichée (6), la portion de retenue (10) présentant sur sa périphérie extérieure une structure nervurée saillant radialement (14) avec plusieurs nervures longitudinales (18) s'étendant dans la direction axiale, la portion d'étanchéité (8) se prolongeant dans la portion de retenue (10) par le biais d'un gradin radial (24) réduisant le diamètre,
**caractérisé en ce que** la partie de raccordement (2) est réalisée avec la tubulure de tuyau (4) sous forme de pièce moulée en plastique d'une seule pièce, la portion d'étanchéité (8) étant réalisée jusqu'à l'étage radial (24) au niveau de la transition avec la portion de retenue (10) avec démoulage axial et de ce fait sous forme lisse sur la périphérie, sans bavure de séparation de moulage, et le reste de la région de la tubulure de tuyau (4) étant réalisé avec démoulage radial et de ce fait avec des bavures de séparation de moulage (30) s'étendant axialement, la structure nervurée (14) ne présentant qu'une seule nervure périphérique (16) et les nervures longitudinales (18) présentant le même diamètre extérieur (D3) s'étendant à chaque fois en partie des deux côtés de la nervure périphérique (16) à l'écart de celle-ci, des renfoncements en forme de chambre, s'étendant jusqu'à la périphérie par ailleurs cylindrique de la portion de retenue (10), étant formés par la structure nervurée (14) à chaque fois entre les nervures périphériques et les nervures longitudinales (16, 18), et les bavures de séparation de moulage (30) s'étendant axialement au-delà de la structure nervurée (14).

4. Raccord de conduite tubulaire selon la revendication 1 ou 2, **caractérisé en ce que** la structure nervurée (14) présente au moins deux, en particulier quatre, nervures longitudinales (18) réparties uniformément sur la périphérie.

5. Raccord de conduite tubulaire selon la revendication 1, **caractérisé en ce qu'**entre deux nervures périphériques adjacentes respectives (16) est disposée au moins une nervure supplémentaire (20) s'étendant sous forme de nervure annulaire dans la direction périphérique, en particulier centralement entre les nervures périphériques (16).

6. Raccord de conduite tubulaire selon l'une quelconque des revendications 1 à 5,
**caractérisé en ce que** les nervures périphériques (16) présentent un diamètre extérieur (D2) qui correspond au moins approximativement à un diamètre extérieur (D1) de la surface d'étanchéité (8a) de la portion d'étanchéité (8).

7. Raccord de conduite tubulaire selon l'une quelconque des revendications 1 à 6,
**caractérisé en ce que** les nervures longitudinales (18) définissent conjointement avec leurs arêtes extérieures un diamètre extérieur (D3) qui est inférieur ou égal au diamètre extérieur (D2) des nervures périphériques (16).

8. Raccord de conduite tubulaire selon l'une quelconque des revendications 5 à 7,
**caractérisé en ce que** la nervure supplémentaire (20) présente un diamètre extérieur (D4) qui est inférieur ou égal au diamètre extérieur (D3) défini par les nervures longitudinales (18).

9. Raccord de conduite tubulaire selon la revendication 3,
**caractérisé en ce que** les nervures longitudinales (18) définissent conjointement avec leurs arêtes extérieures un diamètre extérieur (D3) qui est égal au diamètre extérieur (D2) de la nervure périphérique (16), le diamètre extérieur (D2) de la nervure périphérique (16) correspondant de préférence au moins approximativement au diamètre extérieur (D1) de la surface d'étanchéité (8a) de la portion d'étanchéité (8).

10. Raccord de conduite tubulaire selon l'une quelconque des revendications 1 à 9,
**caractérisé en ce que** la structure nervurée (14) s'étend au-delà d'une région longitudinale axiale qui est conçue de manière adaptée à la largeur mesurée axialement d'un collier de serrage (12) devant être utilisé pour serrer une conduite tubulaire (6) enfichée, de telle sorte que la structure nervurée (14) supporte le collier de serrage (12) contre tout basculement par rapport à l'axe longitudinal de la tubulure.

11. Raccord de conduite tubulaire selon l'une quelconque des revendications 1 à 10,
**caractérisé en ce que** la surface d'étanchéité (8a) de la portion d'étanchéité (8) est réalisée sous forme de ce qu'on appelle une lentille d'étanchéité avec un contour de surface de courbure convexe en coupe longitudinale.

12. Raccord de conduite tubulaire selon l'une quelconque des revendications 1 à 11,
**caractérisé en ce que** la surface d'étanchéité (8a) de la portion d'étanchéité (8) présente une portion de surface cylindrique.

13. Raccord de conduite tubulaire selon l'une quelconque des revendications 1 à 12,
**caractérisé en ce que** la portion d'étanchéité (8) présente, à l'extrémité libre, une surface d'insertion biseautée conique (22).

14. Raccord de conduite tubulaire selon l'une quelconque des revendications 1 à 13,
**caractérisé en ce que** la tubulure de tuyau (4) présente, dans sa région opposée à l'extrémité libre, à la suite de la portion de retenue (10), un élément de butée (26) pour limiter l'enfichage pour la conduite de tuyau (6) devant être enfichée.

15. Raccord de conduite tubulaire selon l'une quelconque des revendications 1 à 14,
**caractérisé en ce que** la partie de raccordement (2) est réalisée avec la tubulure de tuyau (4) sous forme de pièce moulée en plastique d'une seule pièce en polyamide renforcé par des fibres, les bavures de séparation de moulage (30) s'étendant au-delà de deux nervures longitudinales axiales (18) diamétralement opposées.

16. Jeu de conduite (32) comprenant une conduite tubulaire (6) et un ou deux raccords de conduite tubulaire (1) selon l'une quelconque des revendications 1 à 15, dans lequel le/chaque raccord de conduite tubulaire (1) est enfiché avec sa tubulure de tuyau (4) dans une extrémité de conduite de la conduite tubulaire (6), la conduite tubulaire (6) étant serrée radialement sur la périphérie dans la région de la portion de retenue (10) et de la structure nervurée (14) de la/chaque tubulure de tuyau (4) avec un collier de serrage (12).

17. Jeu de conduite selon la revendication 16,
**caractérisé en ce que** le/chaque collier de serrage (12) est réalisé sous forme de ce qu'on appelle un collier à une oreille ou sous forme d'une douille de compression.
